# DEMANDE DE BREVET EUROPEEN

(11) **EP 0 872 167 A1**
(43) Date de publication de la demande: **21.10.1998**
(21) Numéro de dépôt: 98400924.1
(22) Date de dépôt: 14.04.1998
(51) Int. Cl.: A01B 15/14

(54) **Dispositif de réglage et de déplacement latéral des corps d'une charrue**

(30) Priorité: 18.04.1997 FR 9705000
(71) Demandeur: CHARRUES NAUD, 49600 Andreze (FR)
(72) Inventeur: Naud, Bernard, 49600 Andreze (FR)
(74) Mandataire: Phélip, Bruno

(57) **Abrégé**

Le dispositif de réglage et de déplacement latéral des corps (9) comprend un quadrilatère (ABCD) qui est déformable, et des moyens permettant de le déformer, lesquels moyens réalisent de façon distincte, deux réglages de déport: - un réglage du déport adapté à la voie V du tracteur et - un réglage de déport permettant d'effacer le premier corps.

Le réglage du déport selon la voie du tracteur est par exemple effectué au moyen d'un vérin à vis (20) alors que le déport de déplacement latéral des corps s'effectue au moyen d'un vérin hydraulique (20) dont la course est telle qu'elle permet de déplacer l'ensemble des corps, transversalement, d'une distance qui correspond à la largeur de travail (T).

## Description

La présente invention concerne un dispositif permettant de régler latéralement les corps d'une charrue et de les déplacer avec une amplitude importante de façon, par exemple, à faire varier le nombre de corps actifs.

Selon la voie du tracteur, c'est-à-dire l'écart intérieur entre les pneumatiques, il est nécessaire de régler avec précision la prise de raie du premier corps de labour.

Dans certains cas, il est également intéressant de pouvoir effacer le premier corps de labour, c'est-à-dire le faire évoluer dans la raie du passage précédent, derrière la roue du tracteur.

La présente invention propose une charrue équipée d'un dispositif de réglage qui permet d'offrir toutes ces possibilités. L'utilisateur dispose ainsi d'une charrue polyvalente qui s'adapte au relief des parcelles, permettant par exemple de labourer dans un terrain en pente avec un nombre de corps réduit d'une unité tout en conservant une largeur de travail constante entre les différents corps.

On connaît, comme décrit dans le document DE-29 516595, des charrues munies de moyens qui permettent de déporter les corps de labour par rapport au tracteur, sur une grande amplitude.

La présente invention propose des moyens qui permettent à l'opérateur de positionner rapidement sa charrue sans avoir à tâtonner c'est-à-dire sans avoir à rechercher la bonne position comme c'est le cas pour les charrues décrites dans le document précité.

La charrue selon l'invention comporte une poutre liée à la tête d'attelage par l'intermédiaire d'un quadrilatère qui est déformable sous l'effet d'une association de moyens disposés bout à bout ou dans le prolongement l'un de l'autre, permettant de réaliser de façon distincte, deux réglages du déport: - un réglage du déport adapté à la voie du tracteur, pour la prise de raie, et - un réglage de déport permettant d'effacer le premier corps, c'est-à-dire un réglage qui se limite à déplacer la poutre d'une distance qui correspond à la largeur de travail.

Toujours selon l'invention, les moyens qui permettent de déformer le quadrilatère, sont constitués d'un vérin hydraulique dont la course est telle qu'elle permet de réaliser l'effacement du premier corps, lequel vérin hydraulique est associé linéairement à un second vérin, de type mécanique, qui permet de régler et de maintenir le déport du premier corps en fonction de la voie du tracteur.

Selon une variante de réalisation, le vérin hydraulique d'effacement est associé à un vérin hydraulique de réglage du déport selon la voie du tracteur.

Selon une autre variante, le vérin de déformation du quadrilatère est un vérin du type à mémoire de position qui permet de réaliser à la fois le réglage du déport en fonction de la voie du tracteur et le réglage de l'effacement du premier corps.

Toujours selon l'invention, le côté du quadrilatère déformable, qui est situé en face de la traverse de la tête de la charrue, c'est-à-dire entre le bras porteur principal et la bielle de liaison parallèle à ce dernier, comprend deux segments articulés l'un par rapport à l'autre: - un segment qui est articulé sur l'extrémité dudit bras porteur, et qui est solidaire de la poutre, et - un segment qui s'étend entre l'extrémité du segment de poutre et l'articulation située à l'extrémité de ladite bielle de liaison.

Toujours selon l'invention, l'articulation entre les deux segments est située approximativement à mi-distance de leurs axes d'extrémités c'est-à-dire des axes situés pour l'un sur le bras porteur et pour l'autre sur la bielle de liaison.

Selon une autre disposition de l'invention, les moyens de déformation du quadrilatère sont articulés sur l'axe de jonction des deux segments et sur le bras porteur.

Selon une autre disposition de l'invention, les axes situés sur la traverse de la tête, pour l'articulation du bras porteur et de la bielle de liaison, sont disposés de part et d'autre de l'axe de retournement, dans le cas d'une charrue réversible.

Selon une autre disposition de l'invention, un organe de réglage du dévers est interposé entre la poutre et le segment articulé sur la bielle de liaison, lequel organe est associé à un vérin hydraulique qui permet le recentrage de la poutre sur l'axe de retournement pour faciliter les manoeuvres.

L'invention sera encore détaillée à l'aide de la description suivante et des dessins annexés, donnés à titre indicatif, et dans lesquels :

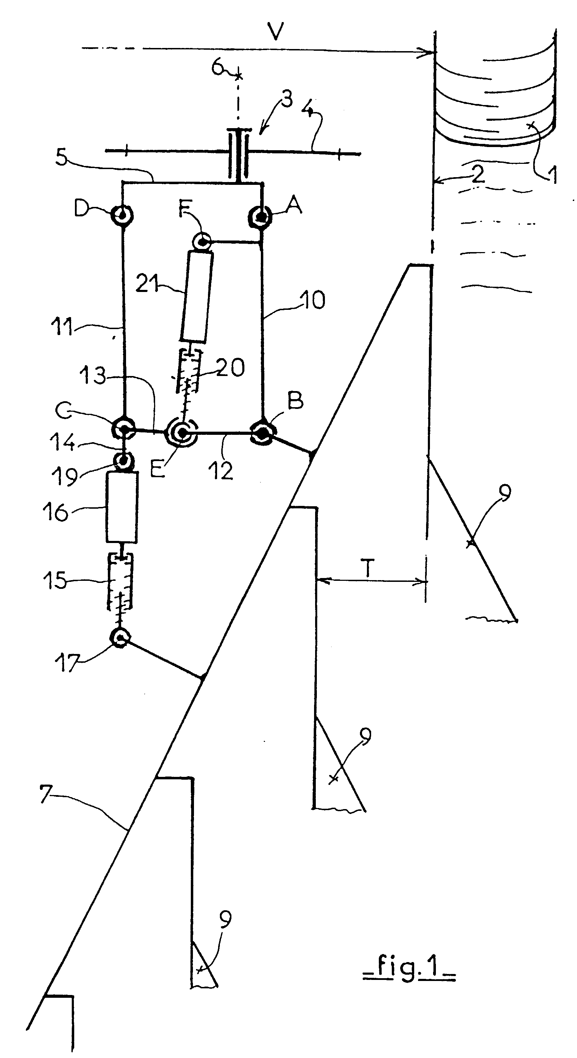

- la figure 1 représente, sous forme de schéma fonctionnel, une charrue selon l'invention dont le premier corps est en position effacée ;

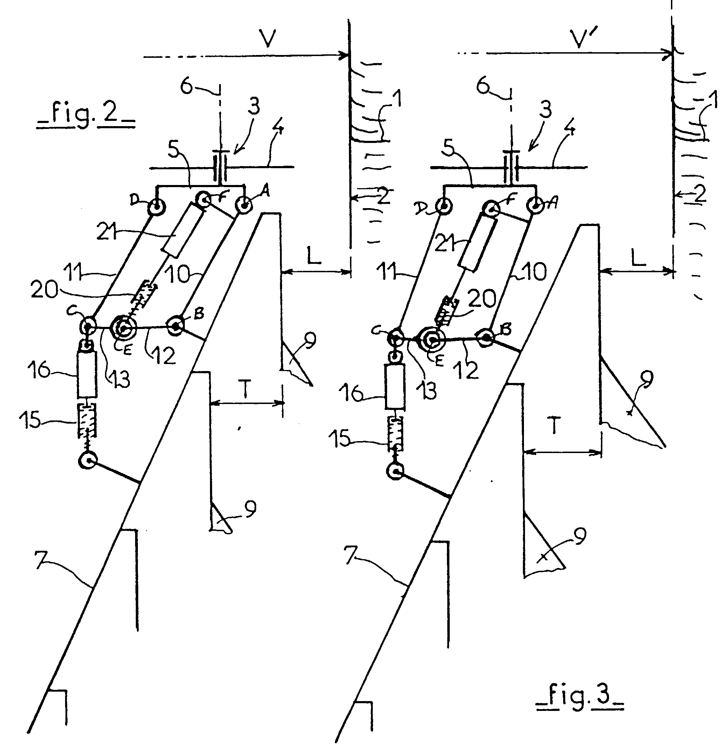

- la figure 2 représente, toujours sous forme de schéma fonctionnel, la charrue selon l'invention en position normale de travail, c'est-à-dire avec tous les corps actifs; sur cette figure 2, le réglage de déport du premier corps pour la prise de raie est équivalent à celui représenté figure 1 ; il correspond à un réglage que l'on rencontre sur un tracteur dont la voie est étroite ;
- la figure 3 représente une charrue dans une configuration normale de travail avec tous ses corps actifs, avec un réglage extrême du déport du premier corps pour la prise de raie, pour un tracteur dont la voie est supérieure à celle que l'on rencontre sur le tracteur susceptible d'être attelé aux charrues représentées figures 1 et 2.

La charrue représentée sur les figures est une charrue portée à l'arrière d'un tracteur dont on aperçoit une portion de roue arrière 1 qui roule dans la raie préalablement établie, contre la muraille 2.

Cette charrue comporte un avant-train 3 dont la tête 4 est reliée de façon classique au système d'attelage trois points non représenté du tracteur. La traverse 5 de la tête est montée à rotation, dans le cas d'une charrue réversible, autour d'un axe central 6. Cette traverse 5 supporte la poutre 7 par l'intermédiaire d'un quadrilatère ABCD, déformable, qui s'apparente à un parallélogramme.

Selon figure 1, la poutre 7 soutient des corps 9 dont le premier présente la particularité d'être effacé, c'est-à-dire qu'il circule dans la raie préalablement tracée et constitue un corps inactif, derrière la roue 1 du tracteur.

La poutre 7 est reliée à la traverse 5 de l'avant-train par le biais du bras porteur 10, lequel bras 10 est articulé en A sur ladite traverse 5 et en B sur la poutre 7.

La traverse 5 comporte aussi un axe D sur lequel est articulé un levier 11. Ce levier 11 est sensiblement parallèle au bras 10 et il constitue le côté CD du quadrilatère ABCD. Les axes A et D sont situés de part et d'autre de l'axe 6.

Le côté BC du quadrilatère est sensiblement parallèle à AD. Il est constitué de deux segments 12 et 13 articulés entre eux selon un axe E. Le segment 12 est solidaire de la poutre 7 et s'étend entre le point B et le point E. Le segment 13 s'étend entre le point E et le point C situé à l'extrémité du levier 11.

Le segment 13 comporte une branche complémentaire 14, représentée à l'équerre, à partir de laquelle s'étendent des moyens qui permettent de régler l'orientation de la poutre 7 c'est-à-dire son dévers. Ces moyens sont constitués d'un vérin à vis 15 et ce vérin est par exemple situé dans le prolongement de la tige d'un vérin hydraulique 16. Le vérin hydraulique 16 est de préférence utilisé pour effectuer une opération de recentrage de la poutre, sur l'axe de retournement 6 afin de faciliter les manoeuvres notamment.

Les vérins 15 et 16 sont interposés entre un axe 17 solidaire de la poutre 7 et un axe 19 situé à l'extrémité de la branche 14.

Le quadrilatère ABCD est déformable pour déplacer la poutre 7 et les corps 9 par rapport à la roue 1 du tracteur. Ces moyens qui permettent la déformation sont interposés entre l'axe E situé sensiblement à mi-distance de BC et un axe F solidaire du bras porteur 10. Selon l'exemple de réalisation représenté sur les figures, on trouve entre E et F, disposés bout à bout, sur un même axe : - un vérin à vis 20 et - un vérin hydraulique 21.

Le vérin à vis 20 constitue un moyen de réglage pratique du déport du premier corps en fonction de la voie V entre les faces internes des roues 1 du tracteur. Ce réglage, lorsque la charrue est toujours attelée au même tracteur, est immuable et peut être conservé dans le temps.

Le vérin 21 permet de déplacer à volonté les corps 9 et en particulier le premier corps pour modifier la largeur de la bande labourée. Le vérin 21 a une course qui permet de déplacer les corps transversalement sur une distance qui correspond à la largeur de travail normale d'un corps 9 c'est-à-dire une distance T qui correspond à l'espace entre deux corps 9.

La figure 2 représente la charrue illustrée figure 1, dans une position différente puisque le premier corps 9 est écarté de la roue 1 et en particulier de la muraille 2. Le premier corps est écarté de la muraille 2 d'une distance L qui correspond à la largeur de travail d'un corps c'est-à-dire à l'écartement entre deux corps de labour T.

On remarque, toujours figure 2, que le vérin 21 est en expansion totale. Le vérin 20 est réglé comme sur la figure 1, c'est-à-dire en fonction de la voie V du tracteur. Ce réglage du vérin 20 s'effectue d'ailleurs d'une façon particulièrement aisée puisqu'il suffit comme représenté figure 1, d'aligner le premier corps sur la face interne de la roue 1 ; dans cette configuration, le vérin 21 est totalement rétracté.

La figure 3 illustre à l'inverse de la figure 2, une configuration de charrue pour une voie V' de tracteur, plus importante. Le vérin 20 est pratiquement totalement rétracté.

Selon une variante de réalisation, non représentée, le vérin 20 peut être du type hydraulique, réglable indépendamment du vérin 21. Il peut également ne faire qu'un avec le vérin 21, lequel dans ce cas est un vérin du type dit à mémoire de façon à conserver une position fixe réglable correspondant à celle du déport du premier corps selon la voie du tracteur.

## Revendications

1. Charrue comportant un dispositif de réglage et de déplacement latéral des corps (9), lesquels corps sont montés sur une poutre (7) liée à la tête d'attelage (4) par l'intermédiaire d'un quadrilatère (ABCD) qui est déformable sous l'effet de moyens associés, disposés dans le prolongement l'un de l'autre, permettant de réaliser de façon distincte, deux réglages de déport: - un réglage du déport adapté à la voie du tracteur, et - un réglage de déport permettant d'effacer le premier corps, c'est-à-dire un réglage correspondant à la largeur de travail d'un corps ou l'écartement entre deux corps de labour.

2. Charrue selon la revendication 1, caractérisée en ce que les moyens de déformation du quadrilatère (ABCD) sont constitués d'un vérin à vis (20) pour le réglage du déport en fonction de la voie du tracteur, et d'un vérin hydraulique (21) pour réaliser l'effacement du premier corps, lesquels vérins sont placés bout à bout.

3. Charrue selon la revendication 1, caractérisée en ce que les moyens de déformation du quadrilatère (ABCD) sont constitués de deux vérins hydrauliques placés bout à bout dont l'un permet le réglage du déport selon la voie du tracteur et l'autre vérin permet d'effacer à volonté le premier corps.

4. Charrue selon la revendication 1, caractérisée en ce que les moyens de déformation du quadrilatère (ABCD) sont constitués d'un vérin du type à mémoire permettant de maintenir à demeure le réglage de déport selon la voie du tracteur, et de modifier à volonté le déport pour effacer le premier corps.

5. Charrue selon l'une quelconque des revendications 1 à 4, caractérisée en ce que le côté (BC) du quadrilatère, situé en face du côté (AD) qui correspond à la traverse de la tête (4), entre le bras porteur (10) formant le côté (AB) et le levier (11) formant le côté (CD), comprend deux segments articulés l'un par rapport à l'autre : - un segment (12) qui est articulé sur l'extrémité dudit bras porteur (10), au niveau du point (A), et qui est solidaire de la poutre (7), et - un segment (13) qui s'étend entre l'extrémité du segment de poutre et l'articulation (C) située à l'extrémité dudit levier (11).

6. Charrue selon la revendication 5, caractérisée en ce que l'articulation (E) entre les deux segments (12 et 13) est située approximativement à mi-distance des axes d'extrémités c'est-à-dire (B) pour l'un situé sur le bras porteur (10) et (C) pour l'autre situé sur l'extrémité du levier (11).

7. Charrue selon l'une quelconque des revendications 1 à 6, caractérisée en ce que les moyens de déformation du quadrilatère (ABCD) sont articulés d'une part sur l'axe d'articulation (E) commun aux segments (12 et 13) et un axe (F) solidaire du bras porteur (10).

8. Charrue selon l'une quelconque des revendications 1 à 7, caractérisée en ce qu'elle comporte un organe de réglage du dévers (15), interposé entre la poutre (7) et le segment articulé sur la bielle de liaison c'est-à-dire le levier (11).

9. Charrue selon la revendication 8, caractérisée en ce que les axes (A) et (D) situés sur la traverse (5) de la tête, sont disposés de part et d'autre de l'axe de retournement (6).

10. Charrue selon la revendication 9, caractérisée en ce que l'organe de réglage du dévers (15) est associé à un vérin hydraulique (16) de recentrage de la poutre (7) utilisée pour des manoeuvres de retournement.
